(19) Europäisches Patentamt
European Patent Office
Office européen des brevets

(11) **EP 2 668 743 B1**

(12) **EUROPEAN PATENT SPECIFICATION**

(45) Date of publication and mention
of the grant of the patent:
**19.10.2016 Bulletin 2016/42**

(51) Int Cl.:
**H04L 12/24** *(2006.01)*

(21) Application number: **11701757.4**

(22) Date of filing: **24.01.2011**

(86) International application number:
**PCT/EP2011/000270**

(87) International publication number:
**WO 2012/100785 (02.08.2012 Gazette 2012/31)**

(54) **METHOD FOR OPTIMIZING ENERGY CONSUMPTION OF A NETWORK**

VERFAHREN ZUR OPTIMIERUNG DES ENERGIEVERBRAUCHS EINES NETZWERKS

PROCÉDÉ POUR OPTIMISER LA CONSOMMATION D'ÉNERGIE D'UN RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.12.2013 Bulletin 2013/49**

(73) Proprietors:
 • **NEC Corporation**
 **Tokyo 108-8001 (JP)**
 • **Universidad Carlos III de Madrid**
 **28911 Leganes Madrid (ES)**

(72) Inventors:
 • **BANCHS ROCA, Albert**
 **E-28232 Las Rozas
 (urb. Molino de la Hoz) Madrid (ES)**
 • **PÉREZ COSTA, Xavier**
 **69121 Heidelberg (DE)**

 • **DE LA OLIVA DELGADO, Antonio**
 **E-28918 Leganés, Madrid (ES)**

(74) Representative: **Patent- und Rechtsanwälte
Ullrich & Naumann
PartG mbB
Schneidmuehlstrasse 21
69115 Heidelberg (DE)**

(56) References cited:
 • **L. CHIARAVIGLIO ET AL.: "Reducing Power
 Consumption in Backbone Networks", IEEE
 INTERNATIONAL CONFERENCE ON
 COMMUNICATION, 20 September 2001
 (2001-09-20), XP031506378, cited in the
 application**
 • **RÄCKE, ROSEN: "Distributed Online Call Control
 on General Networks", SODA '05 PROCEEDINGS
 OF THE SIXTEENTH ANNUAL ACM-SIAM
 SYMPOSIUM ON DISCRETE ALGORITHMS, 2005,
 pages 791-800, XP002629633, ISBN:
 0-89871-585-7**

## Description

The present invention relates to a method for optimizing energy consumption of a network, wherein said network includes a plurality of network nodes, and wherein traffic flows - real flows - are routed from network node to network node within said network.

The work leading to this invention has received funding from the European Community's Seventh Framework Programme FP7/2007-2011 under grant agreement no. 214994.

Today's communication networks are often characterized by network load that is significantly below the total available network capacity. For example, in datacenter networks, at certain times of the day, e.g. at night, network load is small because the services provided by the datacenter are requested much more infrequently than during the day and the network is designed to handle peak traffic without congestion. Consequently, network switches are often utilized well below 100%. In other networks, such as broadband networks, another reason for small load is that network equipment is over provisioned when freshly upgraded in order to provide spare resources that consider future traffic increase until the next upgrade is performed. This fact implies that equipment is in many cases significantly underutilized.

In such situations of network underutilization, it is in principle possible to turn off some network elements in the network to save energy. However, traffic is generally dynamically routed in a way that all network elements are used. Furthermore, QoS (Quality of Service) requirements and other constraints do not allow to easily determine whether a network element is essential or not and can be turned off without impacting network performance or violate QoS constraints. As a result, despite light network load, virtually all network equipment is kept running, and a lot of energy is wasted when utilization is significantly below 100%, in particular when considering a large amount of network elements.

The importance of energy saving solutions for networking has been steadily increasing during the last years due to environmental and business revenue reasons. In order to reduce the energy footprint of current and future systems, engineers are currently working in enhancements considering all networking layers with the objective of optimizing their energy consumption. While some optimizations focus on energy saving while being operational other approaches consider solutions which aim at minimizing the number of nodes being active in the network. The present invention focuses in the latter.

When considering how to selectively powering down nodes (fully or partially) in an operator network one faces the problem of choosing the nodes which will not affect the expected traffic matrix, hence powering down nodes which are not required for the expected traffic matrix. As an example, one can think of a wireless mesh network managed by a network operator which maintains a certain number of nodes active to handle an expected amount of traffic while maintaining other nodes powered down which might be powered up when necessary due to an unexpected or planned traffic increase.

The difficulty in inducing load concentration in a communication network is to realize the concentration in a way that any kind of constraint is met, including network topology, dynamics of network traffic over time, and different types of QoS. There are a few approaches that try to address these problems. For instance, as described in L. Chiaraviglio et al., "Reducing Power Consumption in Backbone Networks", in IEEE International Conference on Communication, 2009, some methods build on complete global knowledge that captures all requirements, which is extensive and can be highly dynamic. Hence, such approaches fail due to computational complexity to provide efficient and scalable means to concentrate load in order to save energy while meeting all the aforementioned constraints. They are not able to determine in a timely manner which routing decisions to make in order to accomplish a more energy-efficient network.

Furthermore, in order to improve computational efficiency some solutions follow a different approach trying to achieve load concentration without relying on complete knowledge, as described for instance in M. Gupta et al., "A Feasibility Study for Power Management in LAN Switches", in 12th IEEE International Conference on Network Protocols, pp. 361-371, 2004. However, such solutions either cannot completely avoid the situation of compromising network performance as they fail to observe some QoS-relevant parameters in their computation or they fail to tap the full energy saving potential.

Document H. Räcke, A. Rosen: "Distributed online call control on general networks", SODA '05 Proceedings of the 16th annual ACM-SIAM Symposium on Discrete Algorithms, 2005, p. 791-800 deals with the problem of online call admission and routing on general networks. The document provides different algorithms for online call control in general networks, some of which being defined as a CMCF (Concurrent Multi-Commodity Flow) problem.

In view of the above it is an object of the present invention to improve and further develop a method for optimizing energy consumption of a network of the initially described type in such a way that, by employing mechanisms that are readily to implement, energy efficiency of the network is optimized in a reliable and efficient way without impacting overall network performance.

In accordance with the invention, the aforementioned object is accomplished by a method comprising the features of claim 1. According to this claim such a method is characterized in the steps of

using a virtual source node and a virtual destination node that are introduced in a representation of said network for performing energy related computation, and creating virtual links between said virtual source node and said virtual destination node, respectively, and each of said network nodes that are not sources of traffic or gateways to the Internet, wherein the capacity of said virtual links is set equal to the product of the maximum number of interfaces $n_{max}$ the involved network node possesses and a largest link group capacity $C_{max}$, wherein communication links between network nodes of said network are combined to link groups in such a way that communication links belonging to the same link group share at least one common resource,

introducing a number k of virtual flows, each one with a throughput requirement of $n_{max} C_{max}$, originating at said virtual source node and terminating at said virtual destination node in such a way that a network node can either route a virtual flow or any real flow,

formulating an IP, Integer Programming, problem that aims at maximizing the number of routed flows - real flows according to a given traffic matrix and virtual flows -, wherein a constraint on each of said network nodes is introduced such that the throughput that traverses a network node cannot exceed $n_{max}C_{max}$,

iterating over the number k of virtual flows by solving said IP problem to observe whether the throughput demands can be satisfied with k network nodes (5) powered down, thereby obtaining the largest k for which said IP problem is feasible, and

powering down those network nodes which are occupied with routing a virtual flow.

According to the invention it has first been recognized that the energy efficiency of a network can be improved by concentrating network load on only those network nodes that are actually needed, while maintaining all other network constraints, such as network topology, the dynamics of network traffic over time, and many different types of quality of service (QoS). This problem is extremely difficult because a network may be very large and imply many routing alternatives, traffic patterns may be highly dynamic on a short time scale and difficult to anticipate, and QoS requirements may change any time.

The present invention proposes a mechanism which, by introducing a virtual source and destination node and a set of virtual flows, is able to find the optimal routing for a given traffic matrix considering the available number of network nodes that may be powered down such that the energy consumption of the network is reduced while no performance degradation is introduced. In other words, increased energy saving is achieved by keeping active only the minimum number of network nodes and by powering down some selected network nodes with no performance impact.

According to the present invention two virtual nodes (source and destination) are introduced into the network. These nodes are not real and are used only for computation regarding energy. By means of virtual links each virtual node is connected to all the nodes in the network that are not sources of traffic or gateways to Internet. For each network node connected to the virtual nodes, a virtual flow is incorporated into the network. The virtual flow is sent from the source virtual node to the destination virtual node through one of the network nodes to which they are connected. For a given traffic matrix, a routing scheme is computed which is able to accept in the network all demands while maximizing the number of virtual flows routed. By the construction of the mechanism, the number of virtual flows that can be routed in the network corresponds to the number of nodes which can be powered down (either fully or partially).

As a result, the method according to the present invention minimizes energy consumption by using an optimization problem formulation. The mechanism according to the present invention guarantees (by combining energy considerations with throughput requirements) that, in addition to minimizing energy consumption, throughput demands will be satisfied and users will not perceive performance degradation. By formulating the problem as an IP, the proposed scheme can rely on standard techniques to solve IP problems, which allows for an efficient and effective implementation.

According to the present invention the capacity of the virtual links is set equal to $n_{max}C_{max}$, wherein $n_{max}$ denotes the maximum number of interfaces of the respective network node (i.e. the network node connecting to the virtual source node and a virtual destination node via virtual links) and $C_{max}$ denotes the maximum capacity of all link group. Further, the throughput requirement of each virtual flow is set to $n_{max}C_{max}$, thus corresponding with the capacity of the virtual links. Then, the IP problem is solved by applying an iterative algorithm in which the number of inactive network nodes is stepwise increased. It may be provided that the iterations are not performed by using online techniques, but offline and incrementally powering down network nodes that are not needed.

Further, according to the present invention communication links between network nodes of the network are combined to link groups in such a way that communication links belonging to the same link group share at least one common resource. This means on the other hand that links from different link groups can be considered to use resources sufficiently independent from each other. For instance, the partitioning may be performed in such a way that links that connect different 802.11 stations to the same access point are combined into a link group, since these links share a common resource, namely the channel at which the access point operates.

Still further, according to the present invention a constraint on each network node is introduced such that the aggregated throughput that traverses a network node cannot exceed $n_{max}C_{max}$. The reason for introducing the concept of the capacity of a network node that coincides with the maximum link group capacity is to ensure that a network node is either dedicated to route real flows or a virtual flow, but never to both flow types simultaneously. The term $n_{max}C_{max}$ is used in order to achieve this goal. By setting the capacity of a network node equal to $n_{max}C_{max}$, it is ensured that if the network node routes real flows, it will have enough capacity to route all the real flows it may need to route. On the other hand, as mentioned above the rate of a virtual flow is set equal to $n_{max}C_{max}$. Therefore, if a network node routes a virtual flow, this flow uses all its capacity and the network node has no capacity left for the real flows.

In this context it is important to note that while indeed the capacities of network nodes are limited, in practice network nodes are designed such that they have the capacity to forward all the incoming traffic. As a consequence, the node capacity is never a bottleneck and the allocated rate is limited only by the capacity of the physical links. Hence, as described above, the node capacity can be used as an artifact to ensure that a network node can either route a virtual flow (and nothing else) or all incoming real flows. Therefore, in the context of the present invention the term "node capacity" does not mean the real capacity of the network node, but rather its virtual capacity, whose purpose is only to ensure that if a virtual flow is routed, there is no capacity left for any other flows.

Summarizing, the present invention provides a generic and media independent path selection with energy considerations that, for a given network topology and traffic matrix, produces optimal routing in terms of energy and throughput by providing a routing which maximizes the number of flows that can be admitted into the network while powering down (fully or partially) network nodes that are not required to transport the given traffic. It can be applied with different link technologies including wired and wireless ones and even heterogeneous scenarios, since the proposed scheme allows expressing the link resources in a flexible way. Since the dynamicity in powering up and down network nodes depends on the capabilities of the network nodes, the method according to the present invention proves to be more useful for coarse-grained than for fine-grained traffic demands.

Since the resources of a link group are shared among the various links of that link group, the more resources that are used by one of the links of the link group, the fewer resources are left to the others. In order to express how the resources of a link group can be shared among the links that belong to the link group, a link group may be characterized by a set of "production costs" associated to each of the links that belong to the link group and the overall capacity of the link group. Then, the rates allocated to each link will obey the following equation

$$\sum_i c_i r_i \le C,$$

where $c_i$ corresponds to the production cost of link $i$, $r_i$ corresponds to the rate allocated to link $_i$ and $C$ is the overall capacity of the link group. The set of "production costs" represents the cost associated to transmit in a given link of the link group. This cost depends on physical parameters of the link such as the modulation rate. For example, the lower the modulation scheme used by a link, the higher will be the cost to allocate rate to this link.

By formulating the problem as an ILP (Integer Linear Programming), the proposed scheme can rely on standard techniques to solve ILP problems, which allows for an efficient and effective implementation. With respect to highly efficient solutions of the formulated ILP problem widely accepted and optimized tools can be used. For instance, standard relaxation techniques may be employed, which first find a solution of the corresponding linear programming (LP) problem, in which the variables $x_i$ and $y_{i,l}$ can take non-integer values, and then find an approximate solution to the IP problem by rounding these variables to integer values.

According to a further preferred embodiment the IP problem may be solved considering the option of only partially powering down network nodes, instead of fully powering them down. The respective decisions may be based on predefined policies, e.g., depending on wake-up times of the network nodes or the like.

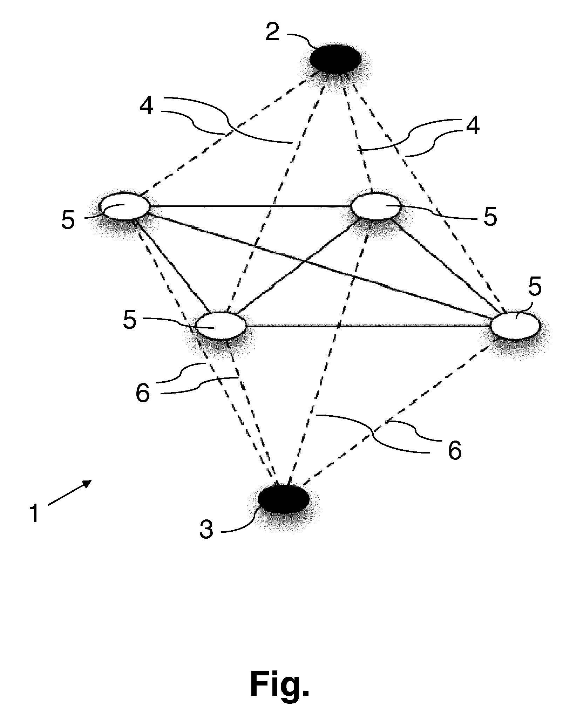

There are several ways how to design and further develop the teaching of the present invention in an advantageous way. To this end, it is to be referred to the patent claims subordinate to patent claim 1 on the one hand, and to the following explanation of a preferred example of an embodiment of the invention illustrated by the drawing on the other hand. In connection with the explanation of the preferred example of an embodiment of the invention by the aid of the drawing, generally preferred embodiments and further developments of the teaching will be explained. In the drawings the only

Fig.     schematically illustrates a network architecture according to an embodiment of the present invention.

With reference to the Fig., in the following a routing algorithm in accordance with the present invention is presented which, in addition to throughput considerations, aims at minimizing the energy consumption of a wireless mesh network. In the network 1 illustrated in the Fig. energy consumption is minimized by using the minimum possible number of network nodes, which act as routers within the network 1, to satisfy the throughput demands, while the remaining network nodes are powered down and thus, their energy consumption is either zero or significantly reduced.

As a first step towards designing the energy aware routing algorithm, the following question has to be answered: Can the throughput demands of all the flows of the existing traffic matrix - or of a traffic matrix expected for some point in future, which of course requires certain knowledge about expected traffic demands - be satisfied while a number kof the network nodes is powered down?

To answer this question, the following mechanism, partly illustrated in the Fig., is introduced:

First, two virtual nodes are introduced into the network 1, namely a virtual source node 2 and a virtual destination node 3. One virtual link 4 is created between the virtual source node 2 and each of the network nodes 5 of the network 1, and another virtual link 6 is created between each of the network nodes 5 of the network 1 and the virtual destination node 3. In the Fig. the virtual links 4, 6 are indicated by dashed lines. The capacity of all virtual links 4, 6 is set equal to $n_{max}C_{max}$, where $n_{max}$ is the maximum number of interfaces that the respective network node 5 has, and $C_{max}$ is the largest link group capacity. A number of $k$ virtual flows are introduced that originate at the virtual source node 2 and terminate at the virtual destination node 3. The throughput requirement of each virtual flow is also set to $n_{max}C_{max}$. Furthermore, a new constraint is introduced on each network node 5 of the network 1, which is that the aggregated throughput that traverses a network node 5 cannot exceed $n_{max}C_{max}$.

With the above, it is achieved that each of the network nodes 5 in the network 1 can either route a virtual flow, which consumes its entire capacity and does not leave any resources for the normal flows, or route just normal flows. Therefore, the network nodes that route virtual flows are not used for the normal flows and can be switched off. It is to be noted that the capacity of a node $(n_{max}C_{max})$ has been chosen such that a node that is not routing a virtual flow has enough capacity for all its normal flows. Since one has a total of $k$ virtual flows, if the problem can be solved and all flows can be routed, i.e. the real ones according to the traffic matrix under consideration and the virtual ones via virtual links from the virtual source node 2 to the virtual destination node 3, then one has found a routing solution that keeps $k$ of the routers 5 inactive, which answers the above question.

The IP (Integer Programming) formulation of the problem outlined above may be defined as follows: Let $x_i$ be 1 if a flow i is routed and 0 otherwise. In this context the term "flow" refers to both real flows (according to a given traffic matrix which is considered) as well as virtual flows. Furthermore, let $y_{i,l}$ be 1 if the path chosen for flow i traverses a link $l$ and 0 otherwise, where the term "link" refers to a pair of directly connected network nodes. Given these variables, where $x_i$, $y_{i,l}$ and $r_i$ (which denotes the bandwidth or rate allocated to flow i) account both for the normal flows and links and the virtual ones, it is the objective to find the allocation that satisfies

$$\max \sum_i x_i$$

subject to

$$x_i = \sum_{l \in s_i} y_{i,l}, \forall i \qquad (1)$$

$$\sum_{l \in N_{in}} y_{i,l} = \sum_{l \in N_{out}} y_{i,l}, \forall N \qquad (2)$$

$$\sum_{l \in L} w_l \sum_{i \in l} y_{i,l} r_i \leq C, \forall L \qquad (3)$$

$$\sum_{i \in N_{in}} y_{i,l} r_i \leq n_{max} C_{max}, \forall N \qquad (4)$$

$$x_i \in \{0,1\}, \forall i \qquad (5)$$

$$y_{i,l} \in \{0,1\}, \forall i,l \qquad (6)$$

The above problem formulation aims at maximizing the number of routed flows i $\left( \sum_i x_i \right)$, subject to the following constraints:

Equation (1) imposes that in case flow i is routed, there is one outgoing link from network node $s_i$ - which is the source node where flow i is generated - for which $y_{i,l} = 1$, while the other $y_{i,l}$'s are zero. In other words, equation (1) expresses that, if flow $i$ is actually routed in the network 1, then flow $i$ is routed through one of the outgoing links from network node $s_i$.

Equation (2) imposes the flow conservation constraints, by guaranteeing that the sum of incoming flows to a network node equals the sum of outgoing flows. The set of incoming and outgoing links is denoted with $N_{in}$ and $N_{out}$, respectively. It is to be noted that this equation applies to all network nodes but sources and gateways.

Equation (3) imposes the capacity constraints for each link group $L$ as given by a linearized capacity model. In particular, this equation imposes that the sum of the aggregated rates $r_i$ for each link $l$, with a corresponding weight $w_i$, cannot exceed the link group capacity $C$.

Equation (4) imposes the capacity restriction on the network nodes 5, hence forcing a network node 5 to either route a virtual flow or any combination of real flows.

Finally, Equations (5) and (6) impose that flows cannot be split among different paths.
The above IP problem can be solved e.g. by using standard relaxation techniques which first find a solution of the corresponding linear programming (LP) problem, in which the variables $x_i$ and $y_{i,l}$ can take non-integer values, and then find an approximate solution to the IP problem by rounding these variables to integer values.

With the above, the question is answered whether the throughput demands can be satisfied with $k$ of the network nodes 5 inactive. Based on this, the following iterative algorithm can be applied in order to find the solution that leaves as many network nodes/routers 5 as possible powered down:

- One starts with no inactive routers ($k = 0$) and observes whether (by solving the above IP problem) the throughput demands can be satisfied.
- In a next iteration step, one inactive router (i.e. the case $k = 1$) is investigated by solving the IP problem with this setting. If one can find a solution, this means that all flows can be routed while powering down one of the network nodes 5.
- Then, variable $k$ is increased by one unit and it is observed whether the throughput demands can still be satisfied with one additional node powered down.
- The process continues with the iteration on $k$ until the demands can no longer be satisfied, which yields the maximum number of network nodes/routers 5 that can be powered down as well as the corresponding routing solution.

The algorithm only requires as many executions of the IP problem solver as network nodes 5 can be powered down. Hence, as long as the IP problem can be solved at a reasonable time (which is the case with the techniques described above), the computational complexity of the proposed algorithm will be affordable. Generally, of course, the computation time required will depend on the size of the network and the corresponding traffic matrix.

## Claims

1. Method for optimizing energy consumption of a network, wherein said network (1) includes a plurality of network nodes (5), and wherein traffic flows - real flows - are routed from network node (5) to network node (5) within said network (1),
   **characterized in** the steps of
   using a virtual source node (2) and a virtual destination node (3) that are introduced in a representation of said network (1) for performing energy related computation, and creating virtual links between said virtual source node (2) and said virtual destination node (3), respectively, and each of said network nodes (5) that are not sources of traffic or gateways to the Internet, wherein the capacity of said virtual links is set equal to the product of the maximum number of interfaces $n_{max}$ the involved network node (5) possesses and a largest link group capacity $C_{max}$,

wherein communication links between network nodes (5) of said network (1) are combined to link groups in such a way that communication links belonging to the same link group share at least one common resource,
introducing a number $k$ of virtual flows, each one with a throughput requirement of $n_{max}C_{max}$, originating at said virtual source node (2) and terminating at said virtual destination node (3) in such a way that a network node (5) can either route a virtual flow or any real flow,
formulating an IP, Integer Programming, problem that aims at maximizing the number of routed flows - real flows according to a given traffic matrix and virtual flows -, wherein a constraint on each of said network nodes (5) is introduced such that the throughput that traverses a network node (5) cannot exceed $n_{max}C_{max}$,
iterating over the number $k$ of virtual flows by solving said IP problem to observe whether the throughput demands can be satisfied with $k$ network nodes (5) powered down, thereby obtaining the largest $k$ for which said IP problem is feasible, and
powering down those network nodes (5) which are occupied with routing a virtual flow.

2. Method according to claim 1, wherein said IP problem is solved by using relaxation techniques which aim at first solving the corresponding ILP, Integer Linear Programming, problem.

3. Method according to claim 1 or 2, wherein said IP problem is solved considering the option of partially powering down network nodes (5).

## Patentansprüche

1. Verfahren zur Optimierung des Energieverbrauchs eines Netzwerks, wobei das Netzwerk (1) eine Vielzahl von Netzwerkknoten (5) umfasst, und wobei Verkehrsflüsse - reale Flüsse - von Netzwerkknoten (5) zu Netzwerkknoten (5) innerhalb des Netzwerks (1) geroutet werden,
   **gekennzeichnet durch** die Schritte
   Verwenden eines virtuellen Quellknotens (2) und eines virtuellen Zielknotens (3), die zur Durchführung von energiebezogenen Berechnungen in eine Repräsentation des Netzwerks (1) eingeführt werden, und Erzeugen von virtuellen Links zwischen dem virtuellen Quellknoten (2) bzw. dem virtuellen Zielknoten (3) und jedem der Netzwerkknoten (5), die keine Quellen von Verkehr oder Gateways zum Internet sind, wobei die Kapazität der virtuellen Links mit dem Produkt der maximalen Anzahl von Schnittstellen $n_{max}$, welche die beteiligten Netzwerkknoten (5) besitzen, und einer größten Linkgruppen-Kapazität $C_{max}$ gleichgesetzt wird, wobei Kommunikations-

links zwischen Netzwerkknoten (5) des Netzwerks (1) derart zu Linkgruppen kombiniert werden, dass Kommunikationslinks, die zu derselben Linkgruppe gehören, mindestens eine gemeinsame Ressource teilen,

Einführen einer Anzahl $k$ von virtuellen Flüssen, jeder mit einer Durchsatzanforderung von $n_{max} C_{max}$, die in der Weise an dem virtuellen Quellknoten (2) entstehen und an dem virtuellen Zielknoten (3) enden, dass ein Netzwerkknoten (5) entweder einen virtuellen Fluss oder irgendeinen realen Fluß routen kann,

Formulieren eines IP, Integer Programming, Problems, das auf eine Maximierung der Anzahl von gerouteten Flüssen - reale Flüsse entsprechend einer gegebenen Verkehrsmatrix und virtuelle Flüsse - abzielt, wobei auf jedem der Netzwerkknoten (5) eine Beschränkung derart eingeführt wird, dass der Durchsatz, der einen Netzknoten (5) durchläuft, $n_{max} C_{max}$ nicht überschreiten kann,

Iterieren über die Anzahl $k$ von virtuellen Flüssen **durch** Lösen des IP Problems, um festzustellen, ob der Durchsatzbedarf mit $k$ ausgeschalteten Netzwerkknoten (5) erfüllt werden kann, wodurch das größte $k$ erhalten wird, für das das IP Problem realisierbar ist, und

Ausschalten derjenigen Netzwerkknoten (5), die mit dem Routing eines virtuellen Flusses beschäftigt sind.

2. Verfahren nach Anspruch 1, wobei das IP Problem unter Verwendung von Relaxationstechniken gelöst wird, die darauf abzielen, zunächst das korrespondierende ILP, Integer Linear Programming, Problem zu lösen.

3. Verfahren nach Anspruch 1 oder 2, wobei das IP Problem unter Berücksichtigung der Möglichkeit eines partiellen Ausschaltens von Netzwerkknoten (5) gelöst wird.

**Revendications**

1. Procédé d'optimisation de la consommation d'énergie d'un réseau, dans lequel ledit réseau (1) comprend une pluralité de noeuds de réseau (5) et dans lequel les flux de trafic, les flux réels, sont routés de noeud de réseau (5) en noeud de réseau (5) à l'intérieur dudit réseau (1),

**caractérisé par** les étapes suivantes :

utilisation d'un noeud source virtuel (2) et d'un noeud de destination virtuel (3) qui sont introduits dans une représentation dudit réseau (1) pour effectuer un calcul concernant l'énergie, et création de liaisons virtuelles entre ledit noeud source virtuel (2) et ledit noeud de destination virtuel (3), respectivement, et chacun desdites noeuds de réseau (5) qui ne sont pas des sources de trafic ou des passerelles vers Internet, la capacité desdites liaisons virtuelles étant fixée de façon à être égale au produit du nombre maximum d'interface $n_{max}$ que le noeud de réseau (5) impliqué possède et d'une capacité de groupe de liaison la plus importante $C_{max}$, les liaisons de communication entre les noeuds de réseau (5) dudit réseau (1) étant combinées en groupes de liaisons de façon à ce que les liaisons de communication appartenant au même groupe de liaisons partagent au moins une ressource commune,

introduction d'un nombre k de flux virtuels, chacun avec une exigence de débit $n_{max}C_{max}$, provenant dudit noeud source virtuel (2) se terminant au niveau dudit noeud de destination virtuel (3) de façon à ce qu'un noeud de réseau (5) puisse router soit un flux virtuel soit un flux réel, formulation d'un problème IP, Integer Programming, qui vise à maximiser le nombre de flux routés, flux réels selon une matrice de trafic donnée et flux virtuels, une contrainte sur chacun desdits noeuds de réseau (5) étant introduite de façon à ce que le débit qui traverse un noeud de réseau (5) ne puisse pas dépasser $n_{max}C_{max}$, itération, sur le nombre k, de flux virtuels en résolvant le problème IP afin d'observer si les exigences de de débit peuvent être satisfaites avec k noeuds de réseau (5) hors tension, ce qui permet d'obtenir le k le plus grand pour lequel ledit problème IP est faisable et

mise hors tension des noeuds de réseau (5) qui sont occupés par le routage d'un flux virtuel.

2. Procédé selon la revendication 1, dans lequel ledit problème IP est résolu à l'aide de techniques de relaxation qui visent à résoudre d'abord l'ILP, Interger Linear Programming, correspondant.

3. Procédé selon la revendication 1 ou 2, dans lequel ledit problème IP est résolu en considérant l'option de mise hors tension partielle des noeuds de réseau (5).

**Fig.**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. CHIARAVIGLIO et al.** Reducing Power Consumption in Backbone Networks. *IEEE International Conference on Communication,* 2009
- **M. GUPTA et al.** A Feasibility Study for Power Management in LAN Switches. *12th IEEE International Conference on Network Protocols,* 2004, 361-371

- **H. RÄCKE ; A. ROSEN.** Distributed online call control on general networks. *SODA '05 Proceedings of the 16th annual ACM-SIAM Symposium on Discrete Algorithms,* 2005, 791-800